# EUROPEAN PATENT SPECIFICATION

(11) **EP 0 872 980 B1**
(45) Date of publication and mention of the grant of the patent: **08.02.2006**
(21) Application number: 98105398.6
(22) Date of filing: 25.03.1998
(51) Int. Cl.: H04L 12/413, H04L 12/44

(54) **Handshaking circuit for resolving contention on a transmission medium regardless of its length**
Quittungsaustausch-Schaltung zur Wettbewerbsauflösung auf einem Übertragungsmedium ungeachtet seiner Länge
Circuit d'échange de signaux de commande pour resoudre un conflit dans un mileu de transmission indépendamment de sa longueur

(30) Priority: 26.03.1997 JP 7318797
(43) Date of publication of application: 21.10.1998
(73) Proprietor: NEC CORPORATION, Tokyo (JP)
(72) Inventor: Nyu, Takayuki, Minato-ku, Tokyo (JP)
(74) Representative: Vossius & Partner

(56) References cited:
- DE-A- 4 331 038
- US-A- 4 430 651
- US-A- 4 547 850
- US-A- 4 598 285
- US-A- 4 707 829
- US-A- 5 293 375
- IEEE STANDARD FOR A HIGH PERFORMANCE SERIAL BUS (IEEE STD. 1394-1995), [Online] 1996, XP002236156 ISBN: 1-55937-583-3 Retrieved from the Internet: <URL:http://ieeexplore.ieee.org/xpl/confer ences.jsp> [retrieved on 2003-03-26]
- MERAKOS L ET AL: "Interconnection of CSMA/CD LANs via an N-port bridge" INFOCOM '89. PROCEEDINGS OF THE EIGHTH ANNUAL JOINT CONFERENCE OF THE IEEE COMPUTER AND COMMUNICATIONS SOCIETIES. TECHNOLOGY: EMERGING OR CONVERGING, IEEE OTTAWA, ONT., CANADA 23-27 APRIL 1989, WASHINGTON, DC, USA,IEEE COMPUT. SOC. PR, US, 23 April 1989 (1989-04-23), pages 28-37, XP010015339 ISBN: 0-8186-1920-1

## Description

The present invention relates to a handshaking circuit for a network of interconnected nodes for establishing a particular relationship, such as parent-child relationship, between adjacent nodes by resolving a contention therebetween which occurs on a transmission medium, such as serial bus, when they simultaneously assert the same protocol status.

A handshaking protocol is standardized by the IEEE Computer Society for interconnecting nodes such as personal computers and associated electronic devices through their ports using a serial bus known as IEEE 1394. Adjacent nodes first establish a parent-child relationship by having one of the nodes assert itself as a "child" of the other. In response, the other node recognizes itself as the parent of the child node and sends an acknowledgment. However, if the parent node has already asserted itself as a child node immediately before it recognizes the parenthood, a contention (collision) occurs between them. When both nodes detect this contention, they relinquish their assertion and wait a random period before making a second attempt.

However, the maximum random period is not sufficient to cover a bus length longer than the standard length of 4. 5 meters. If the length of a serial bus is much longer than the standard length, there are instances where the contention cannot be resolved.

One solution to this problem would be to increase the time difference between the short and long random period values. Since the node is held in an inactive state during the time its random period timer is still counting clock, the use of a large fixed random value would result in an unnecessarily long interval to resolve a contention on short-length serial buses.

DE 43 31 038 A discloses a handshaking circuit. In DE 43 31 038 A, nodes KE1 and KE2 transmit packets P1 and P2, respectively, on a transmission line. Node KE1 measures the propagation time t₁ during which packet P1 travels from node KE1 to a point where it collides with packet P2. Similarly, node KE2 measures the propagation time t₂ during which packet P2 travels from node KE2 to the point of collision with packet P1. Node KE1 compares t₁ with a first reference value SL1. This first reference value is represented by a round-trip propagation time of a packet from KE1 to a reference point KP and back to KE1. Node KE2 compares t₂ with a second reference value SL2 represented by a round-trip propagation time of a packet from KE2 to the same reference point KP and back to KE2. The propagation times t₁ and t₂ are compared with each other, and the node having the longer propagation time has the right to transmit its packet. In DE 43 31 038 A, the winner/loser decision is made based on respective reference values SL1 and SL2. Since these reference values are constant and fixed, the node having a greater reference value has a greater chance to win a contention. Thus, fairness is not provided in DE 43 31 038 A.

US-A-4 547 850 describes a priority control method and an apparatus for a common bus of a data processing system. Serial busses are described in an "IEEE standard for a high performance serial bus" (IEEE Std 1394-1995, IEEE, 1996, New York, NY).

It is therefore an object of the present invention to provide a handshaking circuit capable of resolving an inter-node contention regardless of the length of the transmission medium. The object of the present invention is achieved with the features of the claims.

According to a first aspect of the present invention, there is provided a handshaking circuit for establishing a particular relationship between nodes interconnected by a transmission medium. The handshaking circuit comprises a state detector for monitoring the transmission medium to detect a predetermined first state, a predetermined second state, a contention when predetermined first states are simultaneously asserted on the transmission medium, and an idle state when either of the first and second states is not asserted on the transmission medium. A state machine is connected to the state detector for asserting the first state on the transmission medium to initiate a handshaking process and relinquishing the first state when the contention is detected by the state detector. A receive counter is connected to the state detector for continuously incrementing a receive count value from the instant the contention is detected to the instant the idle state is detected. A transmit counter is connected to the state detector and the state machine for continuously incrementing a transmit count value from the instant the first state is asserted to the instant the contention is detected. The receive count value is compared with the transmit count value. When the transmit count value is greater than the receive count value, the state machine asserts the first state on the transmission medium again and when the transmit count value is smaller than the receive count value, it asserts the second state on the transmission medium.

According to a second aspect, the present invention provides a handshaking circuit for establishing a particular relationship between nodes interconnected by a transmission medium. The handshaking circuit comprises a state detector for monitoring the transmission medium to detect a predetermined first state, a predetermined second state, a contention when predetermined first states are simultaneously asserted on the transmission medium and an idle state when either of the first and second states is not asserted on the transmission medium. A state machine is connected to the state detector for asserting the first state on the transmission medium to initiate a handshaking process and relinquishing the first state when the contention is detected by the state detector. A receive counter is connected to the state detector for continuously incrementing a receive count value from the instant the contention is detected to the instant the idle state is detected. A transmit counter is connected to the state detector and the state machine for continuously incrementing a transmit count value from the instant the first state is asserted to the instant the contention is detected. A decision circuit produces a first decision output when the transmit and receive count values are lower than a predefined threshold and a second decision output when one of the transmit and receive count values is greater than the predefined threshold. A random period timer is activated in response to the detection of the contention by the state detector. The state machine is arranged to respond to the first decision output for asserting the first state on the transmission medium if the random period timer expires during the absence of the first and second states on the transmission medium and asserting the second state on the transmission medium if the random period timer expires during the presence of the first state on the transmission medium. The state machine responds to the second decision output for asserting the first state on the transmission medium when the transmit count value is greater than the receive count value and asserting the second state on the transmission medium when the transmit count value is smaller than the receive count value.

The present invention will be described in further detail with reference to the accompanying drawings, in which:
Fig. 1 is a block diagram of a network of nodes interconnected by serial buses according to the IEEE standard 1394;
Fig. 2 is a block diagram of a prior art handshaking circuit;
Fig. 3A is a time sequence diagram of the current procedure when the length of an internode transmission medium is within the specified maximum value;
Fig. 3B is a time sequence diagram of the current procedure when the length of an internode transmission medium exceeds the specified maximum value;
Fig. 4 is a block diagram of a handshaking circuit according to one embodiment of the present invention;
Fig. 5 is a time sequence diagram of the handshaking circuits of Fig. 4 during a tree identify process between two contending nodes;
Fig. 6 is a block diagram of a handshaking circuit according to a further embodiment of the present invention;
Fig. 7 is a time sequence diagram of the handshaking circuits of Fig. 6 during a tree identify process between two contending nodes;
Fig. 8 is a block diagram of a handshaking circuit according to a modified embodiment of the present invention;
Fig. 9 is a time sequence diagram of the handshaking circuits of Fig. 8 during a tree identify process between two contending nodes;
Fig. 10 is a schematic diagram of a network using repeaters between two nodes according to a further embodiment of the present invention;
Fig. 11 is a block diagram of each repeater of Fig. 10;
Fig. 12 is a block diagram of each handshaking circuit of Fig. 10; and
Fig. 13 is a time sequence diagram of a tree identify process of the repeaters of Fig. 11 and the prior art handshaking circuits of Fig. 12.

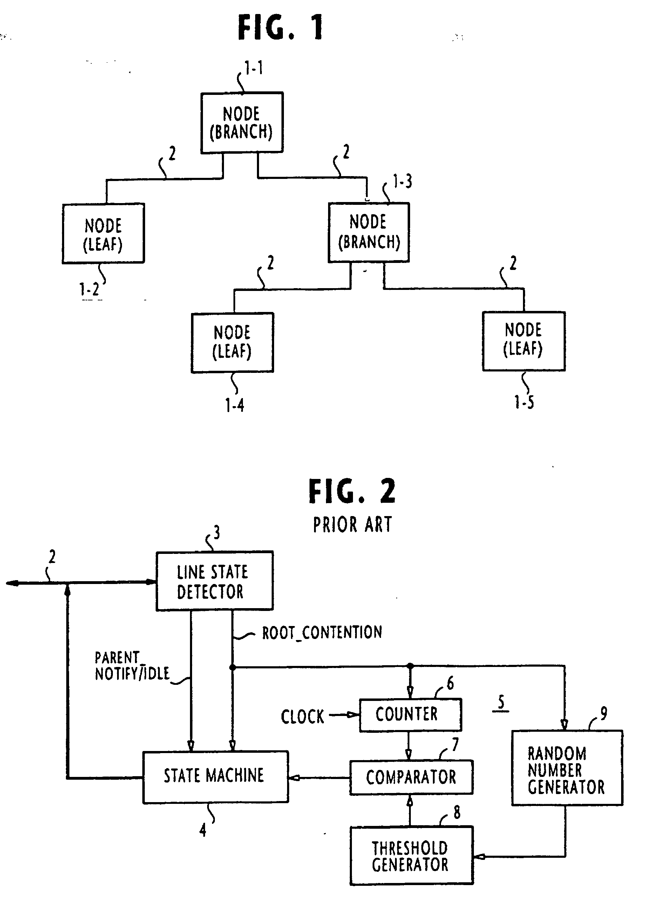

Referring to Fig. 1, there is shown a network of nodes 1-1 to 1-5, such as personal computers and associated electronic devices, which are interconnected by serial buses 2 on which signals of the format standardized by the IEEE Computer Society under "IEEE Std 1394-1995", (or simply "the IEEE 1394") are transmitted. Each of the network nodes uses one or more ports for daisy-chain connection or branch connection to other nodes. Nodes 1-2, 1-4 and 1-5 use only one port for connection to another node and therefore they are called "leaf nodes" and nodes 1-1 and 1-3 use more than one port for connection to other nodes and therefore they are called "branch nodes".

The IEEE 1394 specifies a procedure for determining the parent-child relationships between adjacent nodes. This procedure, known as the tree identify process, begins following a bus reset procedure to configure the network into a tree with a unique root node and labels such port as connected to either the parent of a node or its children.

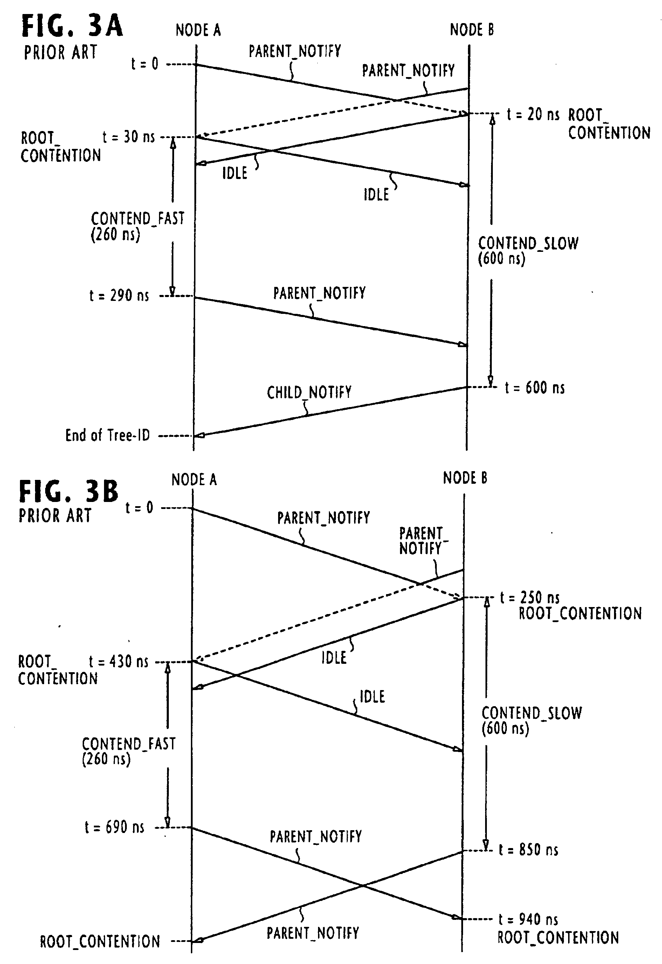

Before proceeding with the detailed description of the present invention, it may prove helpful to provide an explanation of the prior art tree identify process with reference to Figs. 2, 3A and 3B.

Each node has a handshaking circuit as shown in Fig. 2. The handshaking circuit includes a line state detector 3 and a notification circuit, or state machine 4, which connected to the serial bus, or cable 2. The line state detector 3 monitors incoming signals on the bus 2 and produces state indication signals. The state machine algorithm of the tree identify process is embodied in the state machine 4 to transmit a handshaking signal onto the output line of cable 2 by holding the state of the cable at one of Parent_Notify, Child-Notify and idle (i.e., absence of signal) according to the protocol of the tree identify process. When the state machine 4 changes the line state to Parent_Notify following the detection of Parent_Notify by the line state detector 3, a contention, known as a Root_Contention, is said to exist on the cable between adjacent nodes.

When a root contention occurs, the line state detector 3 produces a contention presence signal. In response, the state machine 4 relinquishes the Parent_Notify state and changes the line state to idle, and a counter 6 starts incrementing its clock count and supplies its output to a comparator 7. A random number generator 9 is activated in response to the contention presence signal and supplies a random number, which is binary 0 or 1, to a threshold generator 8. Threshold generator 8 assumes one of two threshold values depending on the random number. If the random number is 0, the threshold generator 8 produces a lower timeout threshold corresponding to the period of 260 ns (which is specified as Contend_Fast according to the tree identify protocol) and if the random number is 1, it produces a higher timeout threshold corresponding to the period of 600 ns (specified as Contend-Slow). The comparator 7 compares the output of the counter 6 with the random threshold value to produce an output when the clock count exceeds the random threshold value.

Thus, counter 6, comparator 7, threshold generator 8 and random number generator 9 constitute a random period timer 5. Depending on the random number, the random period timer 5 operates as a Contend_Fast timer or a Contend_Slow timer.

When the random period timer 5 expires, the state machine 4 asserts Parent_Notify state if the line state detector 3 is detecting an idle state on the cable or asserts Child_Notify state if the line state detector is detecting a Parent_Notify state.

During a tree identify process, a leaf node first changes its output line from idle state to Parent_Notify state, asserting itself as a child of the corresponding branch node. If the branch node responds to this by changing its output line from idle to Child_Notify state, the leaf node recognizes that it is a child of the branch node and relinquishes the Parent_Notify request. A parent-child relationship is established in this way. However, if the branch node has already asserted Parent_Notify state after the leaf node asserted Parent_Notify state, a collision occurs on the serial bus 2 and both signals changes to a contention-indicating state defined by the 1394 standard. Thus, the branch and leaf nodes recognize that a root contention has occurred.

Note that Parent_Notify and Child_Notify states are asserted in the form of continuous signals. Simultaneous presence of Parent_Notify states on a serial bus causes the transmitted continuous signals to change their format at the point of collision and transmitted as a corrupted signal in such a way that the receiving node can recognize the occurrence of a contention. Thus, the corrupted signal is present on the transmission medium 2 until the sending node relinquishes the Parent_Notify request. However, the format of these protocol signals is such that even though Parent_Notify and Child-Notify are simultaneously present on the transmission medium, the state of these signals does not change during propagation through the serial bus.

Fig. 3A shows a time sequence in which the operation of the prior art handshaking circuits of a node A (leaf) and a node B (branch) proceeds when such a contention occurs.

When the state machine 4 of node A knows that the line state detector 3 is detecting an idle state, it asserts Parent_Notify request at time t = 0. Following a propagation delay time of 20 nanoseconds, the line state detector 3 of node B recognizes that the line state has changed to Parent_Notify. If the state machine 4 of node B has already asserted Parent_Notify state, node B will recognize, at time t = 20 ns, that a contention has occurred, and immediately relinquishes Parent_Notify request so that the cable changes to idle state. Thus, at time t = 30 ns, node A detects the contention and relinquishes its Parent_Notify state, changing the line to idle.

At nodes A and B, counters 6 and random number generators 9 are started at instants t = 30 ns and t = 20 ns, respectively. If the random numbers of nodes A and B are 0 and 1, respectively, node A is said to have a Contend_Fast timer (260 ns) and node B a Contend_Slow timer (600 ns). Thus, at time t = 290 ns, node A asserts Parent_Notify request again.

At time t = 600 ns, the Contend_Slow timer expires. Due to the presence of the Parent_Notify state, node B asserts Child_Notify state , recognizing itself as the parent of leaf node A. Node A thus recognizes itself as a child of branch node B.

However, the time difference between the Contend_Slow and Contend_Fast timers is determined on the condition that the maximum bus length is 4.5 meters. Therefore, if the bus length is longer than 4.5 meters, unfavorable situations might occur and root contention cannot be resolved.

For example, if the bus length is 50 meters, the propagation delay time of the bus is approximately 250 ns as shown in Fig. 3B. If the nodes A and B obtain the same random numbers as in the case of Fig. 3A, node A will recognize the occurrence of a root contention at time t = 430 ns and asserts a Parent_Notify request at time t = 690 ns. Node B, on the other hand, recognizes, at time t = 850 ns, that its input line is in an idle state and asserts a Parent_Notify request. Since this change of state is recognized by node B at time t = 940 ns, a root contention occurs again.

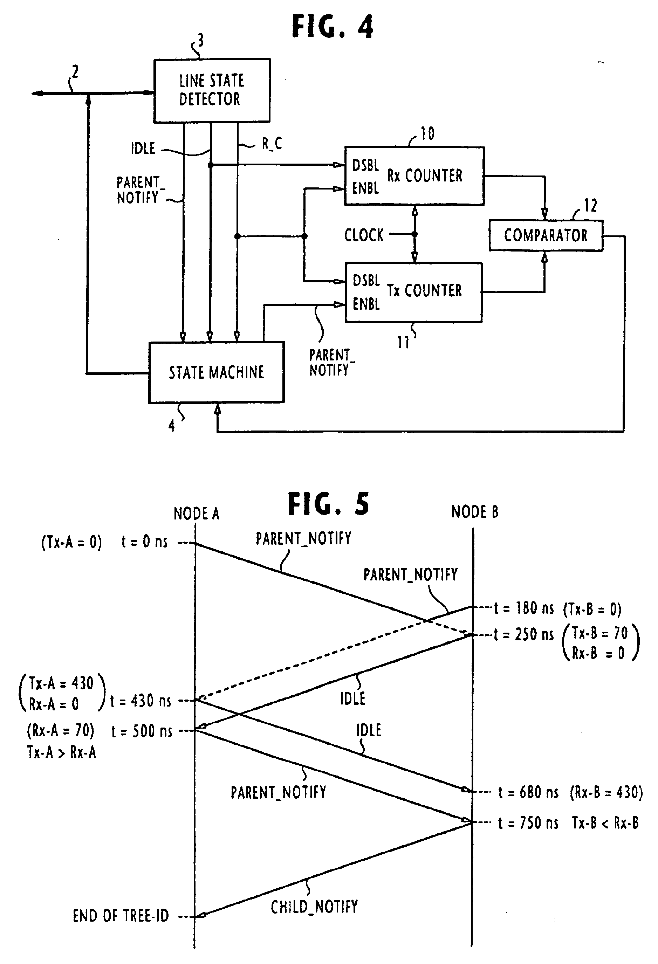

In order to overcome this problem, the present invention provides a handshaking circuit as shown in Fig. 4. This handshaking circuit comprises receive and transmit counters 10 and 11 and a comparator 12 in addition to the line state detector 3 and state machine 4 of Fig. 2.

When the state machine 4 asserts a Parent_Notify request on the serial bus 2, it simultaneously enables the transmit counter 11 to start incrementing a transmit count (Tx). When the line state detector 3 detects a root contention, it disables the transmit counter 11 co stop the transmit count and enables the receive counter 10 to start incrementing a receive count (Rx), while informing the state machine 4 of the occurrence of a contention. State machine 4 responds to the contention by relinquishing the Parent_Notify request. When the line state detector 3 detects an idle state, it disables the receive counter 10 to stop the receive count value, and informs the state machine 4 of this idle line state.

Thus, the counters 10 and 11 have stopped counting their clock, and supply their outputs to the comparator 12. The receive and transmit count values are compared with each other and their relative values are determined to produce a comparator output. The comparator output is supplied to the state machine 4. If the comparator output of a given node indicates that the transmit counter 11 has attained a greater value than that of receive counter 10, the state machine 4 of this node is the first to assert a Parent_Notify request again. If the comparator output indicates otherwise (i.e., the output of uansmit counter 11 is smaller than that of receive counter 10), the state machine 4 of this node may assert a Child_Notify state in response to the output of comparator 12 or in response to a Parent_Notify indication from the line state detector 3.

The time sequence diagram shown in Fig. 5 illustrates the operation of the handshaking circuit of Fig. 4 when a root contention arises on a serial bus with a propagation delay of 250 ns between nodes A and B which are leaf and branch nodes, respectively.

When the state machine 4 of node A recognizes that the line state detector 3 is detecting that the input line is in an idle state, it changes its output line to Parent_Notify state at time t = 0 ns, and enables its transmit counter 11 to start incrementing its count from the initial value (Tx-A = 0).

Meanwhile, at node B, the state machine 4 has changed its output line from idle to Parent_Nocify state at time t = 180 ns and has enabled its transmit counter 11 to start incrementing its count from the initial value (Tx-B = 0).

At time t = 250 ns, the line state detector 3 of node B detects a root contention, notifies the state machine 4 of this fact, enables the receive counter 10 to start incrementing the receive count from the initial value (Rx-B = 0) and disables the transmit counter 11 so that a transmit count value Tx-B = 70 is obtained. State machine 4 of node B thus relinquishes the Parent_Notify request and the line state changes to idle.

At time t = 430 ns, the line state detector 3 of node A detects the root contention, notifies the state machine 4 of this fact, enables the receive counter 10 to start incrementing its count from the initial value (Rx-A = 0) and disables the transmit counter 11 so that a transmit count value of Tx-A = 430 is obtained. State machine 4 of node A thus relinquishes the Parent_Notify request and the line state changes to idle.

At time t = 500 ns, the line state detector 3 of node A senses that its input line has changed to idle state, notifies the state machine 4 of this fact and disables the receive counter 10, producing a receive count value of Rx-A = 70. Since Tx-A is greater than Rx-A and since node A is currently detecting idle state, it is entitled to assert a Parent_Notify request again.

At time t = 680 ns, the receive counter 10 of node B is disabled, producing a receive count value of Rx-B = 430. Since, Tx-B is smaller than Rx-B, the state machine 4 of node B asserts a Child_Notify response when it is informed, at time t = 750 ns, that the state of the serial bus has changed from idle to Parent_Notify.

As a result, a contention between nodes A and B is resolved and a parent-child relationship is established, regardless of the length of the serial bus, and node A recognizes itself as a child of branch node B and branch node B as the parent of leaf node A.

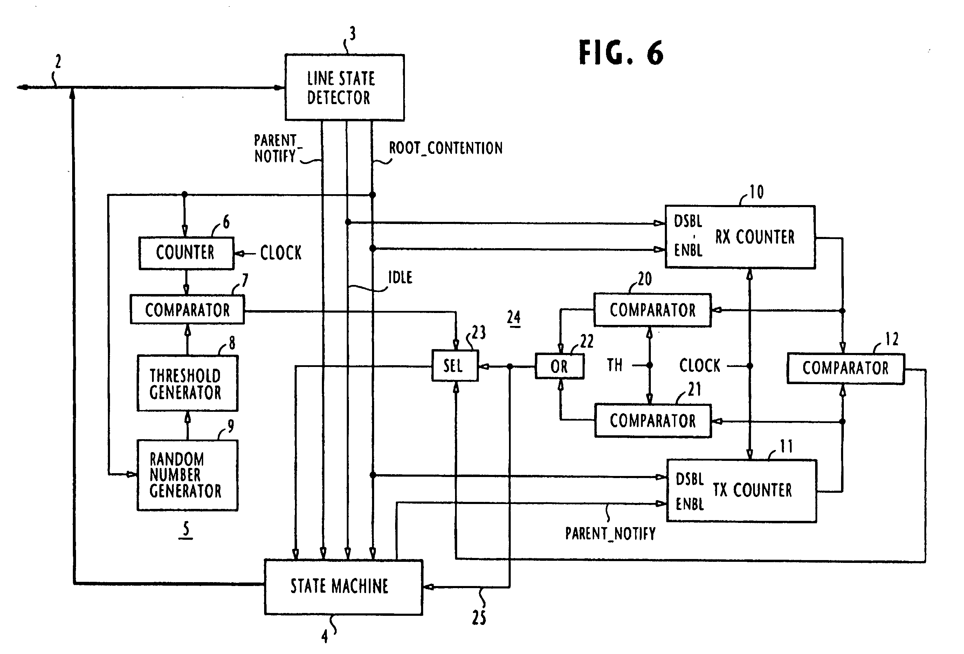

Fig. 6 shows a modified embodiment of the present invention in which parts corresponding in significance to those in Figs. 2 and 4 are marked with the same numerals as those in these figures. This modification is a combination of the handshaking circuits of the prior art and the previous embodiment and a decision circuit that determines which of these handshaking circuits is to be used depending on the transmit and receive count values relative to a predefined threshold.

For this purpose, comparators 20 and 21 are connected to the outputs of receive and transmit counters 10 and 11, respectively, for comparison with a timeout threshold value representing a delay time of 100 ns, for example, which is twice the round-trip propagation delay (50 ns) of a bus length 4. 5 meters. When one of the receive and transmit counters 10 and 11 exceeds the timeout threshold value, the corresponding one of comparators 20 and 21 produces a binary 1 at the corresponding input of an OR gate 22. Thus, when both counters do not exceed the threshold value both comparators 20 and 21 produce a binary 0 and hence the output of OR gate 22 is at binary 0. The output of OR gate 22 is connected to a selector 23, to which the output comparators 7 and 12 are also connected.

When the output of OR gate 22 is a binary 0, the selector 23 selects and couples the output of comparator 7 to the state machine 4. When the output of OR gate 22 is a binary 1, the selector 23 selects and couples the output of comparator 12 to the state machine 4. State machine 4 is supplied with the output of OR gate 22 via a line 25 to indicate in which mode the state machine is to be operated.

When either of the receive and transmit counters do not exceeds the threshold of 100 ns (thus, the output of OR gate is binary 0) and the comparator 7 produces a timeout signal, the state machine 4 is signaled by the output of OR gate 22 via line 25 that it should respond to the output of comparator 7 for operating in the random timer mode of Fig. 2. When one of the receive and transmit counters exceeds the threshold of 100 ns (thus, the output of OR gate is binary 1) and the comparator 12 produces an output indicating which of the receive and transmit counters is greater, the state machine 4 is signaled by the output of OR gate 22 via line 25 that it should respond to the output of comparator 12 for operating in the counter mode of Fig. 4.

In summary, the elements 20, 21, 22 and 23 constitute a decision circuit 24 that supplies the state machine 4 with a first decision output to allow it to operate in the random time mode when the transmit and receive count values are both lower than the 100-ns threshold and with a second decision output to allow it to operate in the counter mode when one of the transmit and receive count values is greater than the threshold. State machine 4 responds to the first decision output for asserting the Parent_Notify state on the serial bus if the random period timer 5 expires during the presence of idle on the serial bus and asserting the Child_Notify state if the random period timer 5 expires during the presence of the Parent_Notify state. State machine 4 responds to the second decision output for asserting the Parent_Notify state when the transmit count value is greater than the receive count value and asserting the Child_Notify state when the transmit count value is smaller than the receive count value.

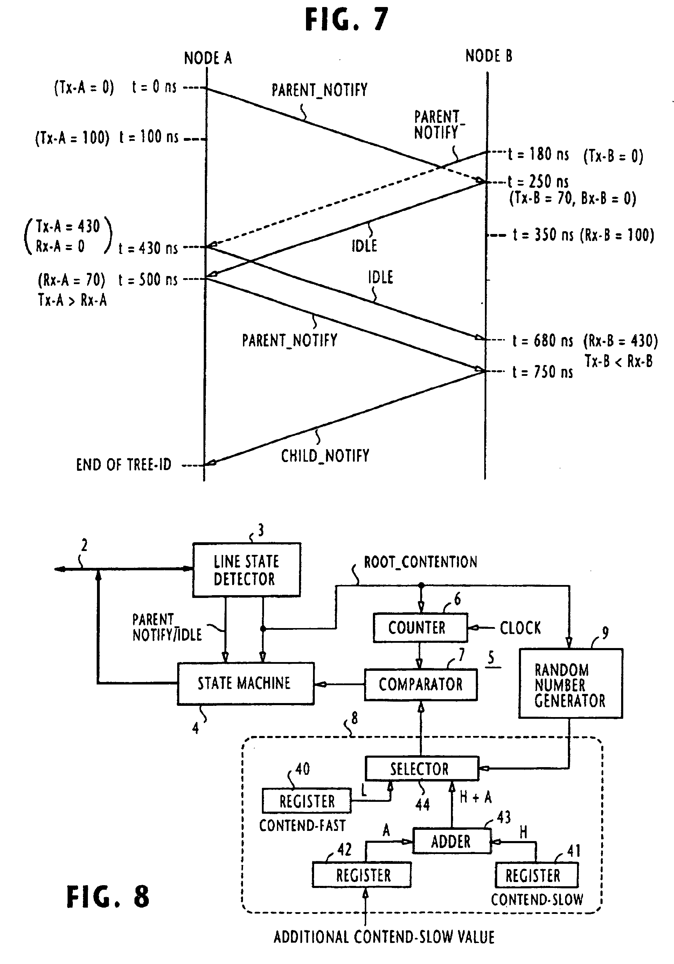

As illustrated in Fig. 7, if node B asserts Parent_Notify state 180 ns after node A initially asserted Parent_Notify in a manner similar to Fig. 5, a contention occurs. If the serial bus 2 is 50 meters long (corresponding to a single-trip propagation delay of 250 ns), the receive counter 10 of node B reaches the threshold value of the comparator 20 at time t = 350 ns, which, as described above, corresponds to the point of determination for node B between the random time mode and the counter mode, as illustrated in Fig. 7.

Since the transmit counter 11 of node A has already exceeded the threshold value of comparator 21 when its line state detector 3 detects the concention at time t = 430 ns, and the transmit counter 11 of node B has already exceeded the threshold value of comparator 21 when its line state detector 3 detects the idle state at time t = 680 ns, nodes A and B operate in the counter mode to resolve the contention in a manner similar to Fig. 5. It is seen that if the round-trip propagation delay of the serial bus is 40 ns, for example, the handshaking circuit operates in the random time mode to resolve the contention as shown in Fig. 3A.

Fig. 8 shows another embodiment of the handshaking circuit in which the prior art threshold generator 8 of Fig. 2 is modified so that it comprises a register 40 for holding a fixed lower threshold value corresponding to the Contend_Fast time of 260 ns, a register 41 for holding a fixed higher threshold value corresponding to the Contend_Slow time of 600 ns, and a register 42 for storing a variable threshold value as an additional Contend_Slow timer value. An adder 43 is provided for summing the contents of registers 41 and 42. One of the outputs of adder 43 and register 40 is selected by a selector 44 according to the output of random number generator 9. The output of selector 44 is supplied as a random threshold value to the comparator 7. The fixed value of register 41 corresponds to the nominal length of the serial bus. The value of register 42 is manually set so that it corresponds to the distance by which the length of the serial bus exceeds the nominal bus length.

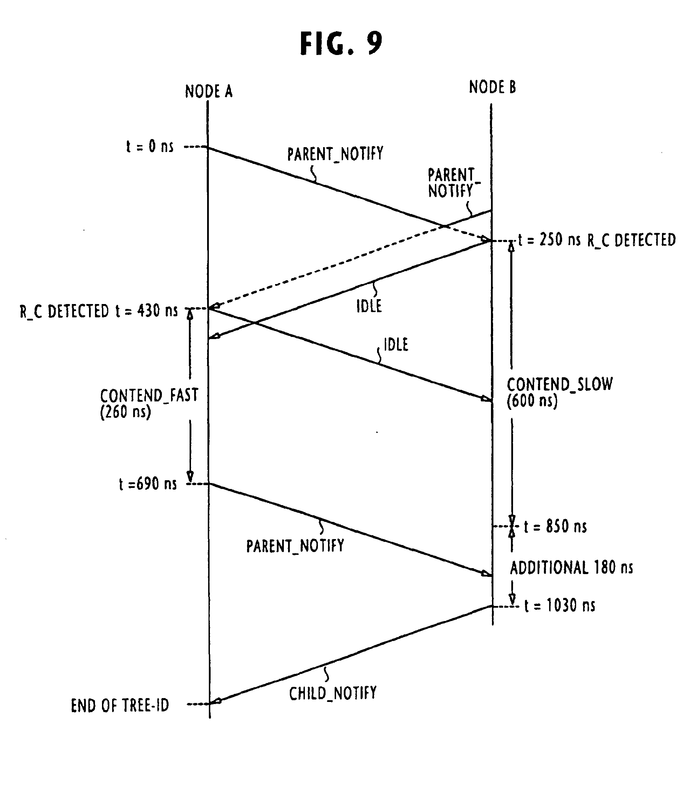

If the additional threshold value of register 42 corresponds to a delay time of 180 ns and the serial bus has a length of 50 meters (where the round-trip propagation delay is approximately 500 ns), the line state detector 3 of node B detects Parent_Notify state within the extended time window of 180 ns, as shown in Fig. 9, provided that the same random numbers are adopted by nodes A and B as those in Fig. 3B. As a result, node B asserts Child_Notify state when its line state detector 3 senses a Parent_Notify state at time t = 1030 ns. Root contention on a serial bus longer than the nominal value can be resolved by adjusting the value of register 42.

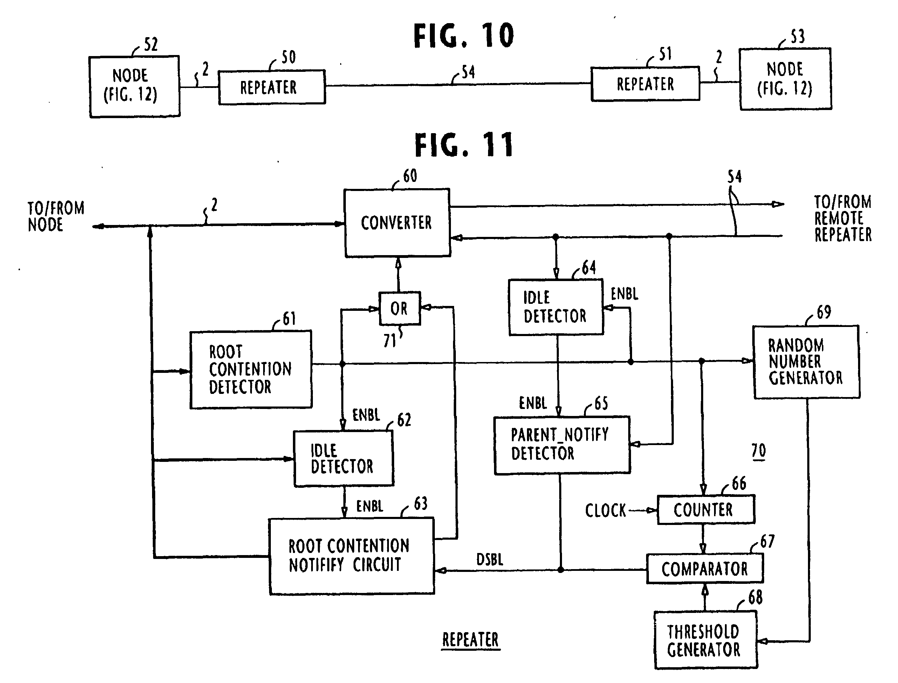

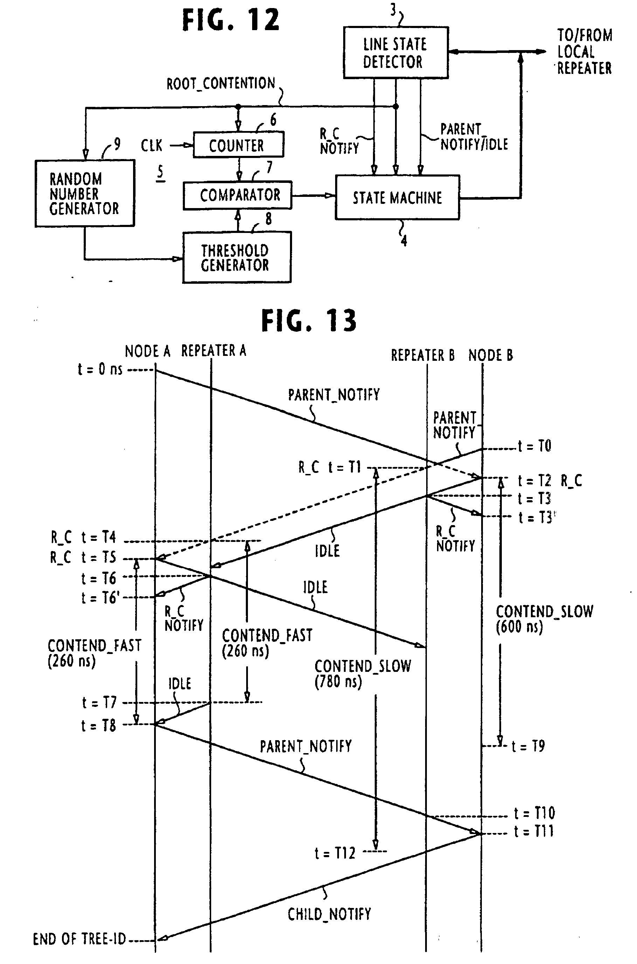

Fig. 10 is a block diagram illustrating another embodiment of this invention in which repeaters 50 and 51 (Fig. 11) are provided at the opposite end of the serial bus 2 and used in combination of handshaking circuits (Fig. 12) of nodes 52 and 53.

As shown in detail in Fig. 11, each repeater includes a format converter 60 interposed between the serial bus 2 with which it is connected to the handshaking circuit of the local node and a cable 54 with it is connected to a remote repeater. Converter 60 performs conversion between the 1394 standard format on the serial bus 2 and the usual bipolar format on the cable 54.

A Root_Contention detector 61 is provided for detecting a root contention on the serial bus 2 to produce a contention presence signal. Idle detectors 62 and 64 are connected to the serial bus 2 and the high-speed cable 54, respectively, to detect an idle state and produce an output when they are enabled by the contention presence signal. A root contention notify circuit 63 is provided to respond to the output of idle detector 62 for setting the serial bus 2 at Root_Contention_Notify state for the purpose of locking the handshaking circuit of the local node in an inactive state. At the same time, the notify circuit 63 supplies a disable signal via an OR gate 71 to the converter 60 to prevent it from passing the signal from the remote repeater to the local node when the RC notify circuit 63 is supplying a signal to the local node, instead of the signal from the remote repeater. The output of root contention detector 61 is also applied as a disable signal via the OR gate 71 to the converter 60 to prevent it from passing the remote signal to the local node when a root contention is detected.

A Parent_Notify detector 65 is connected to the input line of cable 54 to disable the RC notify circuit 63 when the line state changes to Parent_Notify after the detector 65 is enabled by the output of idle detector 64.

Counter 66 starts incrementing a clock count in response to the contention presence signal from detector 61. Random number generator 69 is also responsive to the contention presence signal to produce a random number of either 1 or 0. Threshold generator 68 produces a lower threshold value corresponding to 260 ns (Contend_Fast). According to this embodiment, this threshold generator has a higher threshold value corresponding to 780 ns (Contend_Slow) which is larger than the higher random threshold value specified by the 1394 standard. Depending on the output of random number generator 69, the threshold generator 68 selects one of the threshold values. Comparator 67 produces an output indicating the value of the clock count relative to the threshold value and disables the state machine 63 when the clock count exceeds the threshold value. Elements 66 to 69 thus constitute a random period timer 70.

Fig. 12 shows the handshaking circuit used by the nodes 52 and 53. As illustrated, this handshaking circuit is similar to that shown in Fig. 2 except that the line state detector 3 responds to the Root_Contention Notify state on the serial bus 2 from the local repeater for locking the state machine 4 so that it is prevented from responding to a state indication signal from the line state detector 3 at the time the random period timer 5 expires.

The following is a description of the root contention resolution procedure of the repeaters and handshaking circuits of Figs. 11 and 12 with the aid of the time sequence diagram of Fig. 13 by assuming that node A and repeater A determine a period of 260 ns, repeater B determines a period of 780 ns and node B determines a period of 600 ns.

At time t = 0, node A (leaf node) asserts Parent_Notify state, which is converted by repeaters A and B and detected by node B at time T2 as a root contention since node B has already asserted Parent_Notify at time T0. Thus, repeater B detects a root contention at time T1 and starts its counter 66 and node B changes the local serial bus 2 to an idle state at time T2 and enables its counter 6. Repeater B changes the local serial bus 2 to Root_Contencion_Notify state (instead of the corrupted Parent_Notify state) at time T3 when its idle detector 62 senses the idle state on the serial bus 2.

At time T4, the Parent_Notify state asserted at T0 is sensed by repeater A as a root contention, and relayed to node A, which also senses it at time T5 as a root contention and relinquishes the Parent_Notify state and sets the serial bus to an idle state, while starting its counter 6. Repeater A detects this idle state at time T6 and changes the input line of node A to Root_Contention_Notify state (instead of the corrupted Parent_Notify state).

At time T7, the counter 66 of repeater A reaches the random period of 260 ns, causing the contention notify circuit 63 to relinquish the R_C_ Notify state, thus setting the serial bus to idle. At time T8, the counter 6 of node A reaches the Contend_Fast period of 260 ns.

Due to the occurrence of the idle state at its input line at time T8, node A, which has been locked from time T6', is now unlocked and asserts a Parent_Notify state again as a child of node B.

At time T9, the counter 6 of node B reaches the Contend_Slow period of 600 ns. Since node B has been in a locked state from time T3' due to the presence of the R_C_Notify state, its state machine 4 does not change its Parent_Notify state although its Contend_Slow period already expired at time T9.

At time T10, the Parent_Notify detector 65 of repeater B detects the Parent_Notify state and disables the contention notify circuit 63 so that the serial bus 2 of node B changes from R_C_Notify to Parent_Notify state, which the node B senses at time T11. Thus, node B responds to this Parent_Notify state and asserts a Child_Notify state as a parent of node A. At time T12, the Contend_Slow period of repeater B expires when its counter 66 reaches the timeout threshold of 780 ns.

## Claims

1. A handshaking circuit for establishing a particular relationship between first and second nodes interconnected by a transmission medium, comprising a state detector (3) for monitoring said transmission medium (2) to detect a first state and a second state asserted by the first and second nodes on said transmission medium, and a contention state when said first and second states are simultaneously asserted, a state machine (4) connected to the state detector (3) for asserting said first state on said transmission inedium to initiate a handshaking process and relinquishing the first state when the contention state is detected by the state detector, counter means (10, 11) for detecting a signal propagation time on said transmission medium, and a comparator (12) for comparing the propagation time with a threshold for controlling said state machine (4), **characterized:**
**in that** the state detector (3) is arranged to detect an idle state when either of said first and second states is not asserted,
**in that** said counter means comprises a receive counter (10) for continuously incrementing a receive count value from the instant the contention state is detected to the instant said idle state is detected and a transmit counter (11) for continuously incrementing a transmit count value from the instant the first state is asserted on the transmission medium to the instant the contention state is detected,
**in that** said comparator (12) is arranged to compare the receive count value with the transmit count value, and
**in that** said state machine (4) is arranged to assert the first state on the transmission medium (2) again when the comparator (12) indicates that the transmit count value is greater than the receive count value and assert said second state on the transmission medium when said comparator (12) indicates that the transmit count value is smaller than the receive count value.

2. The handshaking circuit of claim 1, **characterized in that** said state machine (4) is arranged to assert the second state on the transmission medium at the instant the first state is detected again by the state detector.

3. The handshaking circuit of claim 1, **characterized in that** the handshaking circuit further comprises:
decision means (24) is provided for producing a first decision output when the transmit and receive count values are lower than a predefined threshold and a second decision output when one of said transmit and receive count values is greater than the predefined threshold; and
a random period timer (5) for incrementing a count value for a random period in response to the contention state detected by the state detector (3) and producing an output signal when the count value equals said random period,
**in that** said state machine (4) is arranged to:
respond to the first decision output for asserting the first state on the transmission medium if the random period timer generates said output signal during the absence of the first and second states on the transmission medium and asserting the second state on the transmission medium if the random period timer produces said output signal during the presence of the first state on the transmission medium; and
respond to the second decision output for asserting the first state on the transmission medium when said comparator (12) indicates the transmit count value is greater than the receive count value and asserting the second state on the transmission medium when said comparator (12) indicates that the transmit count value is smaller than the receive count value.

4. A method for resolving a contention that occurs on a transmission medium (2) between first and second nodes, wherein said transmission medium (2) is monitored to detect first and second states asserted by said first and second nodes, and a contention state when said first and second states are simultaneously asserted by said nodes, and wherein a propagation time of said first and second states on said transmission medium is detected and compared with a threshold value,
**characterized by** the steps of:
a) monitoring said transmission medium to detect an idle state when either of said predetermined first and second states is not asserted by said nodes;
b) initiating an incremental transmit count value when the first state is asserted on said transmission medium;
c) when said contention state is detected, relinquishing the first state, terminating the incremental transmit count value and initiating an incremental receive count value;
d) when the idle state is detected, terminating the receive count value;
e) comparing the receive count value with the transmit count value; and
f) asserting the first state on the transmission medium again when the transmit count value is greater than the receive count value and asserting the second state on the transmission medium when the transmit count value is smaller than the receive count value.

5. The method of claim 4, wherein the step (f) comprises asserting said second state on the transmission medium at the instant the first state is detected again on the transmission medium.

6. The method of claim 4, further **characterized by**:
making a first decision when the transmit and receive count values are lower than a predefined threshold;
making a second decision when one of said transmit and receive count values is greater than the predefined threshold; and
starting a random period timer in response to the detection of the contention state
in that step f) comprises the steps of:
responsive to the first decision, asserting the first state on the transmission medium if the random period timer expires during the absence of the first and second states on the transmission medium and asserting the second state on the transmission medium if the random period timer expires during the presence of the first state on the transmission medium; and
responsive to the second decision, asserting the first state on the transmission medium when the transmit count value is greater than the receive count value and asserting the second state on the transmission medium when the transmit count value is smaller than the receive count value.

## Patentansprüche

1. Quittungsaustausch-Schaltung zum Einrichten einer bestimmten Beziehung zwischen einem ersten und einem zweiten Knoten, die durch ein Übertragungsmedium miteinander verbunden sind, die aufweist:
einen Zustanddetektor (3) zum Überwachen des Übertragungsmediums (2) zum Erfassen eines ersten Zustands und eines zweiten Zustands, die durch den ersten und den zweiten Knoten auf dem Übertragungsmedium beansprucht werden, und eines Kollisionzustands, wenn der erste und der zweite Zustand gleichzeitig beansprucht werden;
eine mit dem Zustanddetektor (3) verbundene Zustandmaschine (4) zum Beanspruchen des ersten Zustands auf dem Übertragungsmedium zum Einleiten eines Quittungsaustausch-Prozesses und zum Freigeben des ersten Zustands, wenn der Kollisionzustand durch den Zustanddetektor erfaßt wird;
eine Zähleinrichtung (10, 11) zum Erfassen einer Signallaufzeit auf dem Übertragungsmedium; und
einen Vergleicher (12) zum Vergleichen der Signallaufzeit mit einem Schwellenwert zum Steuern der Zustandmaschine (4);
**dadurch gekennzeichnet, dass**
der Zustanddetektor (3) dazu geeignet ist, einen Idle-Zustand zu erfassen, wenn weder der erste noch der zweite Zustand beansprucht wird;
die Zähleinrichtung aufweist: einen Empfangszähler (10) zum fortlaufenden Inkrementieren eines Empfangszählwertes von dem Zeitpunkt, zu dem der Kollisionzustand erfaßt wird, bis zu dem Zeitpunkt, zu dem der Idle-Zustand erfaßt wird, und einen Sendezähler (11) zum fortlaufenden Inkrementieren eines Sendezählwertes von dem Zeitpunkt, zu dem der erste Zustand auf dem Übertragungsmedium beansprucht wird, bis zu dem Zeitpunkt, zu dem der Kollisionzustand erfaßt wird;
der Vergleicher (12) dazu geeignet ist, den Empfangszählwert mit dem Sendezählwert zu vergleichen; und
die Zustandmaschine (4) dazu geeignet ist, den ersten Zustand auf dem Übertragungsmedium (2) erneut zu beanspruchen, wenn das Vergleichsergebnis des Vergleichers (12) anzeigt, dass der Sendezählwert größer ist als der Empfangszählwert, und den zweiten Zustand auf dem Übertragungsmedium zu beanspruchen, wenn das Vergleichsergebnis des Vergleichers (12) anzeigt, dass der Sendezählwert kleiner ist als der Empfangszählwert.

2. Quittungsaustausch-Schaltung nach Anspruch 1, **dadurch gekennzeichnet, dass** die Zustandmaschine (4) dazu geeignet ist den zweiten Zustand auf dem Übertragungsmedium zu dem Zeitpunkt zu beanspruchen, zu dem der erste Zustand durch den Zustanddetektor erneut erfaßt wird.

3. Quittungsaustausch-Schaltung nach Anspruch 1,
**dadurch gekennzeichnet, dass**
die Quittungsaustausch-Schaltung ferner aufweist:
eine Entscheidungseinrichtung (24) zum Erzeugen eines ersten Entscheidungssignals, wenn der Sende- und der Empfangszählwert kleiner sind als ein vorgegebener Schwellenwert, und eines zweiten Entscheidungssignals, wenn der Sende- oder der Empfangsschwellenwert größer ist als der vorgegebene Schwellenwert; und
einen Zufallszeitzähler (5) zum Inkrementieren eines Zählwertes für eine Zufallszeit in Antwort auf den durch den Zustanddetektor (3) erfaßten Kollisionzustand und zum Erzeugen eines Ausgangssignals, wenn der Zählwert der Zufallszeit gleicht;
die Zustandmaschine (4) dazu geeignet ist:
auf das erste Entscheidungssignal anzusprechen, um den ersten Zustand auf dem Übertragungsmedium zu beanspruchen, wenn der Zufallszeitzähler das Ausgangssignal während der Abwesenheit des ersten und des zweiten Zustands auf dem Übertragungsmedium erzeugt, und den zweiten Zustand auf dem Übertragungsmedium zu beanspruchen, wenn der Zufallszeitzähler das Ausgangssignal während der Anwesenheit des ersten Zustands auf dem Übertragungsmedium erzeugt; und
auf das zweite Entscheidungssignal anzusprechen, um den ersten Zustand auf dem Übertragungsmedium zu beanspruchen, wenn das Vergleichsergebnis des Vergleichers (12) anzeigt, dass der Sendezählwert größer ist als der Empfangszählwert, und den zweiten Zustand auf dem Übertragungsmedium zu beanspruchen, wenn das Vergleichsergebnis des Vergleichers (12) anzeigt, dass der Sendezählwert kleiner ist als der Empfangszählwert.

4. Verfahren zum Auflösen eines Konflikts, der auf einem Übertragungsmedium (2) zwischen einem ersten und einem zweiten Knoten auftritt, wobei das Übertragungsmedium (2) überwacht wird, um einen ersten und einen zweiten Zustand zu erfassen, die durch den ersten und den zweiten Knoten beansprucht werden, und eines Kollisionzustands, wenn der erste und der zweite Zustand durch die Knoten gleichzeitig beansprucht werden, und wobei eine Laufzeit des ersten und des zweiten Zustands auf dem Übertragungsmedium erfaßt und mit einem Schwellenwert verglichen wird;
**gekennzeichnet durch** die Schritte:
a) Überwachen des Übertragungsmediums zum Erfassen eines Idle-Zustands, wenn weder der erste noch der zweite Zustand **durch** die Knoten beansprucht wird;
b) Starten eines Zeitzählvorgangs zum Inkrementieren eines Sendezählwertes, wenn der erste Zustand auf dem Übertragungsmedium beansprucht wird;
c) Freigeben des ersten Zustands, Deaktivieren des Zeitzählvorgangs für den Sendezählwert und Starten eines Zählvorgangs zum Inkrementieren eines Empfangszählwertes, wenn der Kollisionzustand erfaßt wird;
d) Deaktivieren des Zählvorgangs für den Empfangszählwert, wenn der Idle-Zustand erfaßt wird;
e) Vergleichen des Empfangszählwertes mit dem Sendezählwert; und
f) erneutes Beanspruchen des ersten Zustands auf dem Übertragungsmedium, wenn der Sendezählwert größer ist als der Empfangszählwert, und Beanspruchen des zweiten Zustands auf dem Übertragungsmedium, wenn der Sendezählwert kleiner ist als der Empfangszählwert.

5. Verfahren nach Anspruch 4, wobei Schritt (f) das Beanspruchen des zweiten Zustands auf dem Übertragungsmedium zu dem Zeitpunkt aufweist, zu dem der erste Zustand erneut auf dem Übertragungsmedium erfaßt wurde.

6. Verfahren nach Anspruch 4, ferner **dadurch gekennzeichnet dass**:
eine erste Entscheidungsoperation ausgeführt wird, wenn der Sende- und der Empfangszählwert kleiner sind als ein vorgegebener Schwellenwert;
eine zweite Entscheidungsoperation ausgeführt wird, wenn der Sende- oder der Empfangszählwert größer ist als der vorgegebene Schwellenwert; und
ein Zufallszeitzähler in Antwort auf die Erfassung des Kollisionzustands gestartet wird;
Schritt (f) die Schritte aufweist:
Beanspruchen des ersten Zustands auf dem Übertragungsmedium in Antwort auf die erste Entscheidungsoperation, wenn der Zufallszeitzähler während der Abwesenheit des ersten und des zweiten Zustands auf dem Übertragungsmedium abläuft, und Beanspruchen des zweiten Zustands auf dem Übertragungsmedium, wenn der Zufallszeitzähler während des Vorhandenseins des ersten Zustands auf dem Übertragungsmedium abläuft; und
Beanspruchen des ersten Zustands auf dem Übertragungsmedium in Antwort auf die zweite Entscheidungsoperation, wenn der Sendezählwert größer ist als der Empfangszählwert, und Beanspruchen des zweiten Zustands auf dem Übertragungsmedium, wenn der Sendezählwert kleiner ist als der Empfangszählwert.

## Revendications

1. Circuit d'échange de signaux de commande pour établir une relation particulière entre des premier et deuxième noeuds interconnectés par un milieu de transmission, comprenant un détecteur d'état (3) pour surveiller ledit milieu de transmission (2) dans le but de détecter un premier état et un deuxième état vérifiés par les premier et deuxième noeuds sur ledit milieu de transmission, et un état de conflit lorsque lesdits premier et deuxième états sont vérifiés en même temps, une machine d'état (4) connectée au détecteur d'état (3) pour vérifier ledit premier état sur ledit milieu de transmission dans le but d'amorcer un processus d'échange de signaux de commande, et pour abandonner le premier état lorsque l'état de conflit est détecté par le détecteur d'état, des moyens de compteur (10, 11) pour détecter un temps de propagation de signal sur ledit milieu de transmission, et un comparateur (12) pour comparer le temps de propagation à un seuil dans le but de contrôler ladite machine d'état (4), le circuit d'échange étant **caractérisé :**
**en ce que** le détecteur d'état (3) est disposé de façon à détecter un état inactif lorsque l'un ou l'autre desdits premier et deuxième états n'est pas vérifié ;
**en ce que** lesdits moyens de compteur comprennent un compteur de réception (10) dans le but d'incrémenter de façon continue une valeur de comptage de réception depuis le moment où l'état de conflit est détecté jusqu'au moment où ledit état inactif est détecté, et un compteur de transmission (11) dans le but d'incrémenter de façon continue une valeur de comptage de transmission depuis le moment où le premier état est vérifié sur le milieu de transmission jusqu'au moment où l'état de conflit est détecté ;
**en ce que** ledit comparateur (12) est disposé de façon à comparer la valeur de comptage de réception à la valeur de comptage de transmission ; et
**en ce que** ladite machine d'état (4) est disposée de façon à vérifier le premier état sur le milieu de transmission (2) à nouveau lorsque le comparateur (12) indique que la valeur de comptage de transmission est plus élevée que la valeur de comptage de réception, et de façon à vérifier ledit deuxième état sur le milieu de transmission lorsque ledit comparateur (12) indique que la valeur de comptage de transmission est moins élevée que la valeur de comptage de réception.

2. Circuit d'échange de signaux de commande selon la revendication 1, **caractérisé en ce que** ladite machine d'état (4) est disposée de façon à vérifier le deuxième état sur le milieu de transmission au moment où le premier état est détecté à nouveau par le détecteur d'état.

3. Circuit d'échange de signaux de commande selon la revendication 1, **caractérisé en ce que** le circuit d'échange de signaux de commande comprend en outre :
des moyens de décision (24) destinés à produire un premier signal de sortie de décision lorsque les valeurs de comptage de transmission et de réception sont moins élevées qu'un seuil prédéfini, et à produire un deuxième signal de sortie de décision lorsque l'une desdites valeurs de comptage de transmission et de réception est plus élevée que le seuil prédéfini ; et
un compteur de période de temps aléatoire (5) dans le but d'incrémenter une valeur de comptage pour une période de temps aléatoire en réponse à l'état de conflit détecté par le détecteur d'état (3) et à produire un signal de sortie lorsque la valeur de comptage est égale à ladite période de temps aléatoire ;
**en ce que** ladite machine d'état (4) est disposée de façon à :
répondre au premier signal de sortie de décision dans le but de vérifier le premier état sur le milieu de transmission si le compteur de période de temps aléatoire produit ledit signal de sortie pendant l'absence des premier et deuxième états sur le milieu de transmission ; et de vérifier le deuxième état sur le milieu de transmission si le compteur de période de temps aléatoire produit ledit signal de sortie pendant la présence du premier état sur le milieu de transmission ; et de façon à :
répondre au deuxième signal de sortie de décision dans le but de vérifier le premier état sur le milieu de transmission lorsque ledit comparateur (12) indique que la valeur de comptage de transmission est plus élevée que la valeur de comptage de réception ; et de vérifier le deuxième état sur le milieu de transmission lorsque ledit comparateur (12) indique que la valeur de comptage de transmission est moins élevée que la valeur de comptage de réception.

4. Procédé pour résoudre un conflit qui se produit sur un milieu de transmission (2) entre des premier et deuxième noeuds, dans lequel ledit milieu de transmission (2) est surveillé dans le but de détecter des premier et deuxième états vérifiés par lesdits premier et deuxième noeuds, et un état de conflit lorsque lesdits premier et deuxième états sont vérifiés en même temps par lesdits noeuds, et dans lequel un temps de propagation desdits premier et deuxième états sur ledit milieu de transmission est détecté et comparé à une valeur de seuil,
**caractérisé par** les étapes consistant à :
a) surveiller ledit milieu de transmission dans le but de détecter un état inactif lorsque l'un ou l'autre desdits premier et deuxième états n'est pas vérifié par lesdits noeuds ;
b) initier une valeur de comptage de transmission incrémentale lorsque le premier état est vérifié sur ledit milieu de transmission ;
c) lorsque ledit état de conflit est détecté, abandonner le premier état, arrêter la valeur de comptage de transmission incrémentale et initier une valeur de comptage de réception incrémentale ;
d) lorsque l'état inactif est détecté, arrêter la valeur de comptage de réception ;
e) comparer la valeur de comptage de réception à la valeur de comptage de transmission ; et
f) vérifier le premier état sur le milieu de transmission à nouveau lorsque la valeur de comptage de transmission est plus élevée que la valeur de comptage de réception, et vérifier le deuxième état sur le milieu de transmission lorsque la valeur de comptage de transmission est moins élevée que la valeur de comptage de réception.

5. Procédé selon la revendication 4, dans lequel l'étape (f) comprend l'étape consistant à vérifier ledit deuxième état sur le milieu de transmission au moment où le premier état est détecté à nouveau sur le milieu de transmission.

6. Procédé selon la revendication 4, **caractérisé en outre par** les étapes consistant à :
produire une première décision lorsque les valeurs de comptage de transmission et de réception sont moins élevées qu'un seuil prédéfini ;
produire une deuxième décision lorsque l'une desdites valeurs de comptage de transmission et de réception est plus élevée que le seuil prédéfini ; et
mettre en marche un compteur de période de temps aléatoire en réponse à la détection de l'état de conflit ;
**caractérisé en ce que** l'étape f) comprend les étapes consistant à :
en réponse à la première décision, vérifier le premier état sur le milieu de transmission si le compteur de période de temps aléatoire arrive à son terme pendant l'absence des premier et deuxième états sur le milieu de transmission, et vérifier le deuxième état sur le milieu de transmission si le compteur de période de temps aléatoire arrive à son terme durant la présence du premier état sur le milieu de transmission ; et
en réponse à la deuxième décision, vérifier le premier état sur le milieu de transmission lorsque la valeur de comptage de transmission est plus élevée que la valeur de comptage de réception, et vérifier le deuxième état sur le milieu de transmission lorsque la valeur de comptage de transmission est moins élevée que la valeur de comptage de réception.
